# EUROPEAN PATENT APPLICATION

(11) **EP 4 697 618 A1**
(43) Date of publication of application: **18.02.2026**
(21) Application number: 24806414.9
(22) Date of filing: 07.05.2024
(51) Int. Cl.: H04B 7/06

(54) **CHANNEL STATE INFORMATION MEASUREMENT METHOD AND COMMUNICATION APPARATUS**

(30) Priority: 12.05.2023 CN 202310544124; 20.09.2023 CN 202311225947
(71) Applicant: Huawei Technologies Co., Ltd., Shenzhen, Guangdong 518129 (CN)
(72) Inventor: HUANG, Wenwen, Shenzhen, Guangdong 518129 (CN); HUA, Meng, Shenzhen, Guangdong 518129 (CN); JIAO, Shurong, Shenzhen, Guangdong 518129 (CN)
(74) Representative: Goddar, Heinz J.
(86) International application number: PCT/CN2024/091517
(87) International publication number: WO 2024/235061

(57) **Abstract**

This application provides a channel state information measurement method and a communication apparatus. The method includes: A terminal device receives a first CSI-RS from a network device on a first CSI-RS transmission occasion in an active time of cell DTX; and sends first CSI to the network device on a first CSI transmission occasion in an active time of cell DRX, where the first CSI is obtained through measurement of the first CSI-RS, the first CSI-RS transmission occasion is a CSI-RS transmission occasion that is not later than a slot in which a reference resource is located and that is closest to the first CSI transmission occasion and in the active time of cell DTX, and the slot in which the reference resource is located is determined based on the first CSI transmission occasion. According to the method, the terminal device can transmit the CSI on the CSI transmission occasion in the active time of the cell DRX, to improve communication performance.

## Description

This application claims priority to Chinese Patent Application No. 202310544124.5, filed with the China National Intellectual Property Administration on May 12, 2023, and entitled "CHANNEL STATE INFORMATION MEASUREMENT METHOD AND COMMUNICATION APPARATUS"; and this application further claims priority to Chinese Patent Application No. 202311225947.8, filed with the China National Intellectual Property Administration on September 20, 2023 and entitled "CHANNEL STATE INFORMATION MEASUREMENT METHOD AND COMMUNICATION APPARATUS", which are incorporated herein by reference in their entireties.

### TECHNICAL FIELD

This application relates to the field of communication technologies, and in particular, to a channel state information measurement method and a communication apparatus.

### BACKGROUND

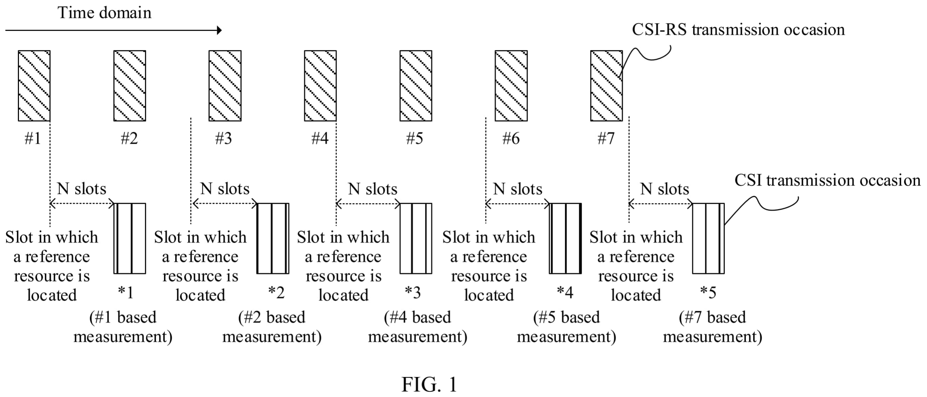

A procedure of channel state information (channel state information, CSI) measurement includes: A network device sends a CSI-RS to a terminal device by using a channel state information reference signal (channel state information reference signal, CSI-RS) transmission occasion; and the terminal device measures the CSI-RS, and sends a measurement result to the network device based on a CSI transmission occasion. When there is a time restriction on the CSI measurement (including a time domain restriction on channel measurement and/or a time domain restriction on interference measurement), the CSI-RS used by the terminal device for CSI measurement is a CSI-RS transmitted on a CSI-RS transmission occasion that is not later than a slot in which a reference resource corresponding to the CSI transmission occasion is located and that is closest to the CSI transmission occasion. For example, in FIG. 1, the CSI-RS transmission occasion includes #1 to #7, the CSI transmission occasion include *1 to *5, and a time domain position of the reference resource corresponding to the CSI transmission occasion is a preset time domain position before a start position of the CSI transmission occasion (in FIG. 1, the time domain position of the reference resource is an N^{th} slot before the slot in which the CSI transmission occasion is located). Therefore, CSI-RS transmission occasions corresponding to CSI transmission occasions are shown in FIG. 1.

A new radio (new radio, NR) communication system supports cell discontinuous transmission (cell discontinuous transmission, cell DTX) and cell discontinuous reception (cell discontinuous reception, cell DRX) to reduce power consumption of the network device. Herein, the cell DTX means that the network device sends some downlink signals (for example, periodic/semi-persistent CSI-RSs) only in an active time of the cell DTX, and does not send some downlink signals (for example, periodic/semi-persistent CSI-RSs) in an inactive time of the cell DTX; and the cell DRX means that the network device receives some uplink signals (for example, periodic/semi-persistent CSI) only in an active time of the cell DRX, and does not receive some uplink signals (for example, periodic/semi-persistent CSI) in an inactive time of the cell DRX. In this case, if there is a time restriction on CSI measurement, the terminal device may be unable to measure and report CSI for a long period of time. As a result, communication performance is affected.

### SUMMARY

Embodiments of this application provide a channel state information measurement method and a communication apparatus, to avoid a case in which a terminal device cannot send CSI to a network device for a long time, and improve communication performance.

According to a first aspect, this application provides a channel state information measurement method. An example in which the method is performed by a terminal device is used. The method includes: The terminal device receives a first CSI-RS from a network device on a first CSI-RS transmission occasion in an active time of cell DTX; and sends first CSI to the network device on a first CSI transmission occasion in an active time of cell DRX, where the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of the cell DTX, and the slot in which the reference resource is located is determined based on the first CSI transmission occasion.

**In** the method described in the first aspect, when there is a time restriction on CSI measurement, the CSI reported by the terminal device on the CSI transmission occasion in the active time of the cell DRX may be measured based on the received CSI-RS (that is, the CSI-RS transmitted on the CSI-RS transmission occasion in the active time of the cell DTX). This avoids a case in which the terminal device cannot send the CSI to the network device for a long time, and improves communication performance.

According to a second aspect, this application provides a channel state information measurement method. An example in which the method is performed by a terminal device is used. The method includes: The terminal device receives a first CSI-RS from a network device on a first CSI-RS transmission occasion in an active time of cell DTX; and the terminal device further sends first CSI to the network device, where the first CSI is obtained through measurement based on the first CSI-RS, the first CSI-RS transmission occasion is a CSI-RS transmission occasion that is not later than a slot in which a reference resource is located and that is closest to a first CSI transmission occasion and in the active time of the cell DTX, and the slot in which the reference resource is located is determined based on the first CSI transmission occasion.

In the method described in the second aspect, when there is a time restriction on CSI measurement, the CSI reported by the terminal device on the CSI transmission occasion may be measured based on the received CSI-RS (that is, the CSI-RS transmitted on the CSI-RS transmission occasion in the active time of the cell DTX). This avoids a case in which the terminal device cannot send the CSI to the network device for a long time, and improves communication performance.

With reference to the first aspect or the second aspect, in a possible implementation, the first CSI-RS is a non-zero power NZP CSI-RS used for channel measurement.

With reference to the first aspect or the second aspect, in a possible implementation, the first CSI is further obtained through measurement based on the second CSI-RS, and the second CSI-RS is an NZP CSI-RS or CSI-IM used for interference measurement, where the second CSI-RS is transmitted on a second CSI-RS transmission occasion, the second CSI-RS transmission occasion is the CSI-RS transmission occasion that is not later than the slot in which the reference resource is located and that is closest to the first CSI transmission occasion and in the active time of the cell DTX, and the slot in which the reference resource is located is determined based on the first CSI transmission occasion.

With reference to the first aspect or the second aspect, in a possible implementation, the first CSI-RS transmission occasion and the second CSI-RS transmission occasion are in the same active time of the cell DTX.

With reference to the first aspect or the second aspect, in a possible implementation, the first CSI is further obtained through measurement based on a third CSI-RS, and the third CSI-RS is CSI-IM used for interference measurement, where the third CSI-RS is transmitted on a third CSI-RS transmission occasion, the third CSI-RS transmission occasion is a CSI-RS transmission occasion that is not later than the slot in which the reference resource is located and that is closest to the first CSI transmission occasion, and the slot in which the reference resource is located is determined based on the first CSI transmission occasion.

With reference to the first aspect or the second aspect, in a possible implementation, the CSI-RS transmission occasion that is not later than the slot in which the reference resource is located and that is closest to the first CSI transmission occasion is located in an inactive time of the cell DTX.

With reference to the first aspect or the second aspect, in a possible implementation, the terminal device may further receive CSI-RS resource configuration information from the network device, where the CSI-RS resource configuration information indicates the first CSI-RS transmission occasion, and the CSI-RS resource configuration information includes a non-zero power NZP CSI-RS resource set, and the terminal device may further receive CSI reporting configuration information from the network device, where the CSI reporting configuration information indicates that there is a time domain restriction on channel measurement, and the CSI reporting configuration information is associated with the CSI-RS resource configuration information.

With reference to the first aspect or the second aspect, in a possible implementation, the terminal device may further receive CSI-RS resource configuration information from the network device, where the CSI-RS resource configuration information indicates the first CSI-RS transmission occasion, and the CSI-RS resource configuration information includes an NZP CSI-RS resource set used for interference measurement, and/or includes a channel state information interference measurement CSI-IM resource set; and the terminal device may further receive CSI reporting configuration information from the network device, where the CSI reporting configuration information indicates that there is a time domain restriction on interference measurement, and the CSI reporting configuration information is associated with the CSI-RS resource configuration information.

With reference to the first aspect or the second aspect, in a possible implementation, the terminal device may further receive cell DTX configuration information from the network device, where the cell DTX configuration information indicates the active time of the DTX, and the terminal device may further receive cell DRX configuration information from the network device, where the cell DRX configuration information indicates the active time of the DRX. Based on the possible implementation, the terminal device may determine the active time of the cell DTX and the active time of the cell DRX, and the terminal device and the network device communicate with each other in the active time of the cell DTX and the active time of the cell DRX, to reduce power consumption of the network device.

According to a third aspect, this application provides a communication apparatus. The communication apparatus may be a terminal device, or may be an apparatus in a terminal device, or may be an apparatus that is compatible with a terminal device. The communication apparatus may alternatively be a chip system. The communication apparatus may perform the method in the first aspect. A function of the communication apparatus may be implemented by hardware, or may be implemented by hardware executing corresponding software. The hardware or the software includes one or more units or modules corresponding to the foregoing function. The unit or module may be software and/or hardware. Refer to the method and beneficial effects in the first aspect or the second aspect for operations performed by the communication apparatus and beneficial effects thereof.

According to a fourth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect by using a logic circuit or executing code instructions.

According to a fifth aspect, this application provides a computer-readable storage medium. The storage medium stores computer program or instructions; and when the computer program or the instructions are executed by a communication apparatus, the method according to the first aspect or the second aspect is implemented.

According to a sixth aspect, this application provides a computer program product including instructions. When a communication apparatus reads and executes the instructions, the communication apparatus is enabled to perform the method according to the first aspect or the second aspect.

According to a seventh aspect, this application provides a communication system, including a communication apparatus configured to perform the method in the first aspect and a communication apparatus configured to perform the method performed by the network device described in the first aspect; or including a communication apparatus configured to perform the method in the second aspect and a communication apparatus configured to perform the method performed by the network device described in the second aspect.

### BRIEF DESCRIPTION OF DRAWINGS

FIG. 1 is a diagram of a relationship between a CSI transmission occasion and a CSI-RS transmission occasion according to an embodiment of this application;
FIG. 2 is a diagram of a communication system according to an embodiment of this application;
FIG. 3 is a diagram of enabling and disabling a cell DRX cycle according to an embodiment of this application;
FIG. 4 is a diagram of switching a cell DRX cycle according to an embodiment of this application;
FIG. 5 is a diagram of a relationship between a CSI transmission occasion and a CSI-RS transmission occasion that are combined with cell DTX and cell DRX according to an embodiment of this application.
FIG. 6a is a schematic flowchart of a channel state information measurement method according to an embodiment of this application;
FIG. 6b is a schematic flowchart of another channel state information measurement method according to an embodiment of this application;
FIG. 7 is a diagram of another relationship between a CSI transmission occasion and a CSI-RS transmission occasion that are combined with cell DTX and cell DRX according to an embodiment of this application;
FIG. 8 is a diagram of a structure of a communication apparatus according to an embodiment of this application; and
FIG. 9 is a diagram of a structure of still another communication apparatus according to an embodiment of this application.

### DESCRIPTION OF EMBODIMENTS

Terms "first", "second", and the like in this specification, the claims, and the accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification means that specific features, structures, or characteristics described with reference to embodiments may be included in at least one embodiment of this application. The phrase shown in various positions in the specification may not necessarily refer to a same embodiment, and is not an independent or optional embodiment exclusive from another embodiment. It should be understood that embodiments described in this specification may be combined with other embodiments.

To facilitate understanding of embodiments of this application, the following first describes some terms used in embodiments of this application.

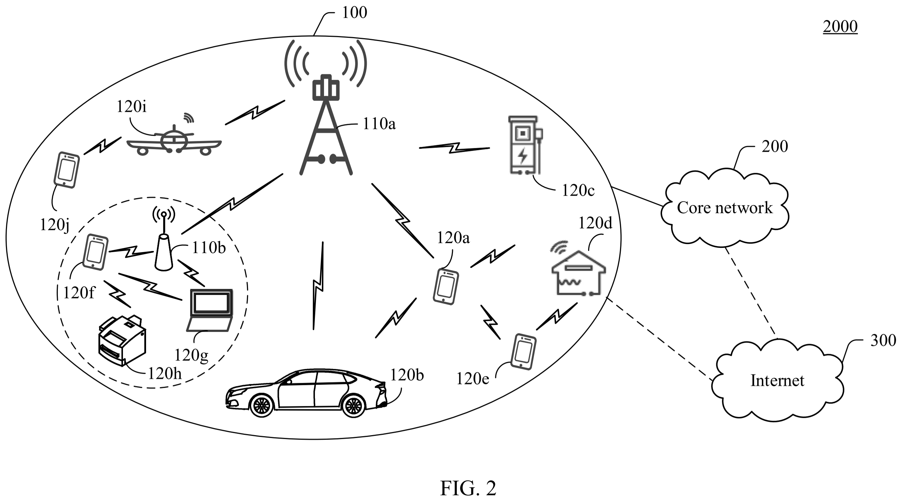

FIG. 2 is a diagram of an architecture of a communication system 2000 to which an embodiment of this application is applied. As shown in FIG. 2, the communication system includes a radio access network (radio access network, RAN) 100 and a core network 200. Optionally, the communication system 2000 may further include an internet 300. The RAN 100 may include at least one RAN node (for example, 110a and 110b in FIG. 2, which are collectively referred to as 110), and may further include at least one terminal (for example, 120a to 120j in FIG. 2, which are collectively referred to as 120). The RAN 100 may also include another RAN node, for example, a wireless relay device and/or a wireless backhaul device (not shown in FIG. 2). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner.

The RAN 100 may be an evolved universal terrestrial radio access (evolved universal terrestrial radio access, E-UTRA) system, an NR system, or a future radio access system defined in the 3rd Generation Partnership Project (3rd Generation Partnership Project, 3GPP). The RAN 100 may further include the foregoing two or more different radio access systems. The RAN 100 may alternatively be an open RAN (open RAN, O-RAN).

A RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), a radio unit (radio unit, RU), or the like. The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to a base station, or receive a signal from a base station. The terminal may alternatively be referred to as a terminal device, a user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the base station function herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

For ease of understanding of related content in embodiments of this application, the following further explains some terms used in embodiments of this application. This part is merely for ease of understanding, and cannot be construed as revealing or specifically limiting the technical solutions of this application.

### 1. Cell DTX technology and cell DRX technology

In the cell DTX technology, a network device may send a signal in an active time (active time) of the cell DTX, and may not send a signal in an inactive time (non-active time or inactive time) of the cell DTX, to reduce power consumption of the network device. In the cell DRX technology, the network device may receive a signal in an active time of cell DRX, and may not receive a signal in an inactive time of the cell DRX, to reduce power consumption of the network device. It should be noted that the cell DTX technology is a discontinuous transmission technology of the network device, and the cell DRX technology is a discontinuous reception technology of the network device. Names of the cell DTX and the cell DRX are not limited in this application. The active time may also be referred to as on duration (on duration) or active duration, and the inactive time is a time other than the active time in a cell DTX cycle or a cell DRX cycle. Names of the active time and the inactive time are not limited in this application.

In the active time of the cell DTX, the network device sends a downlink signal to the terminal device on a transmission occasion of the downlink signal. In the inactive time of the cell DTX, the network device may not send some downlink signals on the transmission occasion of the downlink signal. Correspondingly, the terminal device may not receive the downlink signals in the inactive time of the cell DTX. The downlink signals that the network device may not send in the inactive time of the cell DTX include but are not limited to one or more of the following: a periodic CSI-RS, a semi-persistent CSI-RS, a rank indicator (rank indicator, RI) included in a reporting quantity in CSI reporting configuration information associated with the periodic CSI-RS or the semi-persistent CSI-RS, and a semi-persistent physical downlink shared channel (physical downlink shared channel, PDSCH). The periodic CSI-RS is used as an example. In the inactive time of the cell DTX, the network device does not send the CSI-RS on a transmission occasion of the CSI-RS. Correspondingly, the terminal device does not receive the CSI-RS on a CSI-RS transmission occasion in the inactive time of the cell DTX.

In the active time of the cell DRX, the terminal device sends an uplink signal to the network device on a transmission occasion of the uplink signal. In the inactive time of the cell DRX, the terminal device may not send some uplink signals on the transmission occasion of the uplink signal. Correspondingly, the network device may not receive the uplink signals in the inactive time of the cell DRX. The uplink signals that the terminal device may not send in the inactive time of the cell DRX include but are not limited to one or more of the following: a periodic CSI, a semi-persistent CSI, a periodic sounding reference signal (sounding reference signal, SRS), a semi-persistent SRS, a configured grant (configured grant, CG) physical uplink shared channel (physical uplink shared channel, PUSCH), and a scheduling request (scheduling request, SR). The periodic CSI is used as an example. In the inactive time of the cell DRX, the terminal device does not send the CSI on the CSI transmission occasion. Correspondingly, the network device does not receive the CSI on the CSI transmission occasion in the inactive time of the cell DRX.

In a possible implementation, the network device sends cell DTX configuration information to the terminal device, so that the terminal device determines the active time of the cell DTX and the inactive time of the cell DTX based on the cell DTX configuration information. The cell DTX configuration information may include a cell DTX cycle, a start position of the active time, a length of the active time, and the like. In another possible implementation, the network device sends cell DRX configuration information to the terminal device, so that the terminal device determines the active time of the cell DRX and the inactive time of the cell DRX based on the cell DRX configuration information. The cell DRX configuration information may include a cell DRX cycle, a start position of the active time, a length of the active time, and the like.

The following should be noted: ①. From a perspective of reducing power consumption of the network device, cell DTX configuration information corresponding to a plurality of terminal devices in a same cell should be the same. For example, the network device communicates with a terminal device 1 to a terminal device 5 in a cell 1. In this case, the terminal device 1 to the terminal device 5 receive same cell DTX configuration information from the network device. Similarly, cell DRX configuration information corresponding to a plurality of terminal devices in a same cell should also be the same. Certainly, cell DTX configuration information of a plurality of terminal devices in a same cell may alternatively be different. In this case, power consumption reduction of the network device is compromised. Similarly, cell DRX configuration information of a plurality of terminal devices in a same cell may alternatively be different, and power consumption reduction of the network device is also compromised. This is not specifically limited in this application. Cell DTX configuration information of different cells may be the same or different, and cell DRX configuration information of different cells may be the same or different. This is not specifically limited in this application. In addition, the cell DTX technology and the cell DRX technology are different from a connected-discontinuous reception (connected-discontinuous reception, C-DRX) technology. The C-DRX is a discontinuous reception technology of the terminal device, and is mainly used to reduce power consumption of the terminal device. C-DRX configuration information of different terminal devices in a same cell is different. As a result, in the C-DRX, power consumption of the network device cannot be reduced effectively. In addition, C-DRX configuration information of a same terminal device in different cells in a same frequency range (for example, a frequency range 1 (Frequency range 1, FR1)) is the same. The cell DTX technology, the cell DRX technology, and the C-DRX technology may work together. This is not limited in this application.

②. The network device may independently configure cell DTX configuration information and cell DRX configuration information for the terminal device. In other words, the network device may send only the cell DTX configuration information to the terminal device; or the network device may send only the cell DRX configuration information to the terminal device; or the network device sends the cell DTX configuration information and the cell DRX configuration information to the terminal device by using two messages; or the network device sends the cell DTX configuration information and the cell DRX configuration information to the terminal device by using a same message. This is not specifically limited in this application.

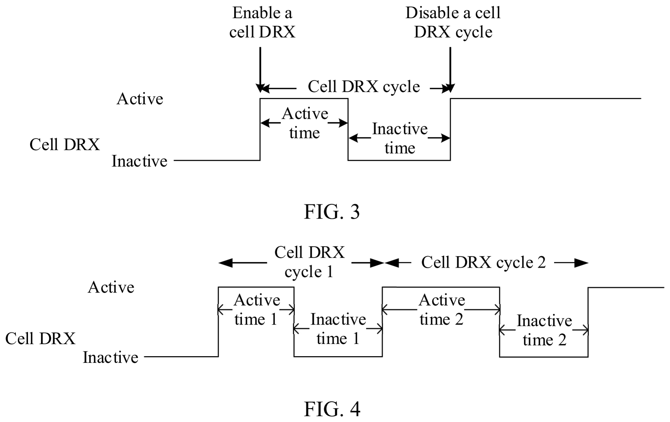

③. The network device may configure one or more pieces of cell DTX configuration information of one cell for the terminal device, for example, configure at least one cycle of the cell DTX; or the network device may configure one or more pieces of cell DRX configuration information of one cell for the terminal device, for example, configure at least one cycle of the cell DRX. The network device may indicate, by using signaling, the terminal device to enable (or referred to as activate) or disable (or referred to as deactivate) the cell DTX and/or the cell DRX. Alternatively, when there are a plurality of pieces of cell DTX configuration information and/or a plurality of pieces of cell DRX configuration information, the network device may indicate one of the plurality of pieces of cell DTX configuration information and/or one of the plurality of pieces of cell DRX configuration information by using signaling, for example, indicate one of a plurality of cycles of the cell DTX and/or one of a plurality of cycles of the cell DRX, to switch between cell DTX and/or cell DRX cycles. For example, FIG. 3 is a diagram of enabling and disabling the cell DRX by the network device by using signaling. In FIG. 3, after the cell DRX is enabled, the network device and the terminal device send and receive a signal based on the cell DTX configuration information. After the cell DRX is disabled, the network device and the terminal device do not need to send and receive a signal based on the cell DTX configuration information. In other words, the network device and the terminal device consider that an active time always applies, and send and receive a signal. FIG. 4 is a diagram of indicating switching of cell DRX configuration information by the network device by using signaling. In FIG. 4, signaling may indicate switching from a cycle 1 to a cycle 2, or it may be understood as disabling the cycle 1 and enabling the cycle 2. The signaling includes but is not limited to one of the following: radio resource control (radio resource control, RRC), a MAC control element (control element, CE), or downlink control information (downlink control information, DCI). A transmission occasion of the signaling is not limited in this application.

### 2. CSI measurement and reporting

Generally, a CSI measurement and reporting procedure includes: The network device sends a CSI-RS to the terminal device; the terminal device performs measurement based on the CSI-RS, for example, channel measurement or interference measurement; and the terminal device sends CSI obtained through measurement to the network device. Further, the network device may perform related processing based on the CSI, for example, perform resource scheduling. Therefore, the terminal device reports the CSI to the network device in time, to improve communication performance.

Generally, the CSI-RS may include one or more of the following: a non-zero-power (non-zero-power, NZP) CSI-RS, a zero-power (zero-power, ZP) CSI-RS, and channel state information interference measurement (channel state information interference measurement, CSI-IM). The CSI-IM is also a type of ZP CSI-RS. Based on sending manners of CSI-RSs in time domain, the CSI-RSs may be further classified into periodic CSI-RSs, semi-persistent CSI-RSs, and aperiodic CSI-RSs. It should be noted that the CSI-RS mentioned in this application may be a periodic CSI-RS or a semi-persistent CSI-RS.

Generally, a CSI reporting quantity may include one or more of the following information: a channel quality indicator (channel quality indicator, CQI), a precoding matrix indicator (precoding matrix indicator, PMI), a CSI-RS resource indicator (CSI-RS resource indicator, CRI), a synchronization signal/broadcast channel resource block indicator (synchronization signal/physical broadcast channel block resource indicator, SSBRI), a layer indicator (layer indicator, LI), an RI, a layer 1 reference signal received power (layer 1 reference signal received power, L1-RSRP), a layer 1 signal to interference plus noise ratio (layer 1 signal to interference plus noise ratio, L1-SINR), and a capability index (Capability Index). The RI indicates a quantity of transmission streams that can be used when the network device performs data transmission and that are recommended by the terminal device, the PMI indicates a precoding matrix that is recommended to be used for the quantity of transmission streams, the CQI indicates a modulation and coding scheme that is recommended for the quantity of transmission streams and the precoding matrix, and use of the modulation and coding scheme may be expected to achieve a preset block error rate. The LI is used to notify the network device of a column in a precoding matrix corresponding to the PMI, and the column corresponds to a strongest stream of a codeword with a large wideband CQI. The CRI and the SSBRI are used by the terminal device to notify, when the network device configures a plurality of CSI-RS resources or synchronization signal blocks (synchronization signal block, SSB) for CSI measurement, the network device of a specific resource on which a result of the measurement is based. The capability index indicates a maximum quantity of SRS ports. According to reporting types of CSI in time domain, CSI reporting (CSI reporting) may be further classified into periodic, semi-persistent, or aperiodic reporting.

In a possible implementation, before the network device sends the CSI-RS to the terminal device, the network device may further send CSI-RS resource configuration (CSI-ResourceConfig) information and CSI report configuration (CSI-ReportConfig) information to the terminal device.

For a periodic/semi-persistent CSI-RS, one piece of CSI-RS resource configuration information may include one or two CSI-RS resource sets (CSI-RS resource sets). For an aperiodic CSI-RS, one piece of CSI-RS resource configuration information may include more CSI-RS resource sets. One CSI-RS resource set may include one or more CSI-RS resources or SSBs. For a periodic/semi-persistent CSI-RS, the network device may configure information, for example, a periodicity and an offset of a CSI-RS resource, and the network device and the terminal device may determine a CSI-RS transmission occasion based on the information. A transmission occasion of the aperiodic CSI-RS may be indicated by using DCI.

The CSI reporting configuration information includes but is not limited to at least one of the following content: ① a CSI reporting configuration identifier (reportConfigID), used to distinguish between different CSI reporting configurations; ② a CSI time domain reporting type (reportConfigType); ③ a CSI reporting quantity (reportQuantity); ④ a CSI reporting frequency domain configuration (reportFreqConfiguration), for example, whether a PMI and/or a CQI are/is wideband or subband, and PMIs and/or CQIs of specific subbands if the PMI and/or the CQI are/is subband; ⑤ a parameter of a time domain restriction used for channel measurement (timeRestrictionForChannelMeasurements), indicating whether there is a time domain restriction on channel measurement; ⑥ a time domain restriction parameter used for interference measurement (timeRestrictionForInterferenceMeasurements), indicating whether there is a time domain restriction on the interference measurement; ⑦ a codebook configuration (codebook Config); and ⑧ an identifier of a CSI-RS resource configuration associated with the CSI reporting, which may include an identifier of a CSI-RS resource configuration used for channel measurement (resourcesForChannelMeasurement), an identifier of a CSI-IM resource configuration used for interference measurement (csi-IM-ResourcesForInterference), and/or an identifier of an NZP CSI-RS resource configuration used for interference measurement (nzp-CSI-RS-ResourcesForInterference).

When the parameter timeRestrictionForChannelMeasurements in the CSI reporting configuration information indicates "configured", it indicates that the CSI reporting configuration information indicates that there is a time domain restriction on channel measurement. In this case, the CSI reported by the terminal device by using the CSI transmission occasion is obtained through measurement on an NZP CSI-RS transmission occasion that is not later than a slot in which a reference resource corresponding to the CSI transmission occasion (also referred to as a CSI reference resource) is located and that is closest to the CSI transmission occasion. When the parameter timeRestrictionForInterferenceMeasurements in the CSI reporting configuration information indicates "configured", it indicates that the CSI reporting configuration information indicates that there is a time domain restriction on interference measurement. In this case, the CSI reported by the terminal device by using the CSI transmission occasion is obtained through measurement on a CSI-IM transmission occasion that is not later than a slot in which a reference resource corresponding to the CSI transmission occasion is located and that is closest to the CSI transmission occasion, or is obtained through measurement on an NZP CSI-RS transmission occasion that is not later than a slot in which a reference resource corresponding to the CSI transmission occasion is located and that is closest to the CSI transmission occasion and used for interference measurement.

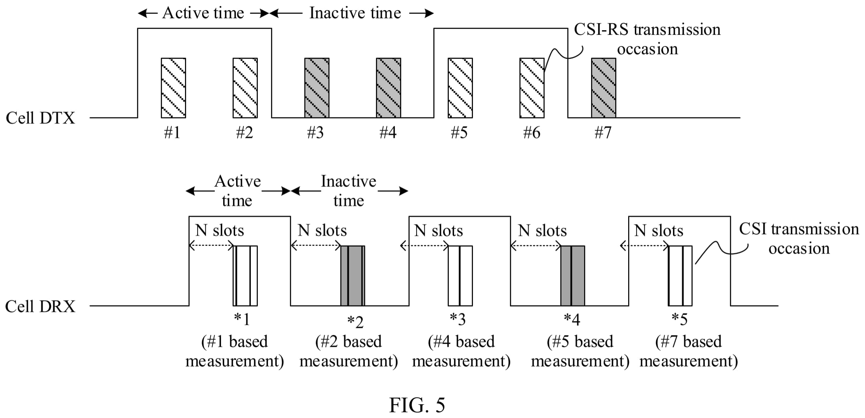

With reference to cell DTX and cell DRX technologies, when there is a time restriction on CSI measurement, a CSI-RS transmission occasion that is not later than a slot in which a reference resource corresponding to a CSI transmission occasion is located and that is closest to the CSI transmission occasion may be in an inactive time of cell DTX, or a CSI transmission occasion may be in an inactive time of cell DRX. Consequently, the terminal device cannot send CSI for a long period of time, and communication performance is affected. As shown in FIG. 5, after the terminal device sends, on a CSI transmission occasion *1, CSI measured based on a CSI-RS transmission occasion #1, the terminal device does not send CSI on CSI transmission occasions *2 and *4 in the inactive time of the cell DRX. In addition, because the network device does not send a CSI-RS on CSI-RS transmission occasions #3, #4, and #7 in the inactive time of the cell DTX, the terminal device does not send CSI on CSI transmission occasions *3 and *5 in the active time of the cell DRX.

To avoid a case in which the terminal device cannot send a CSI-RS for a long period of time, this application provides a channel state information measurement method. The following further describes in detail the channel state information measurement method and the communication apparatus provided in embodiments of this application.

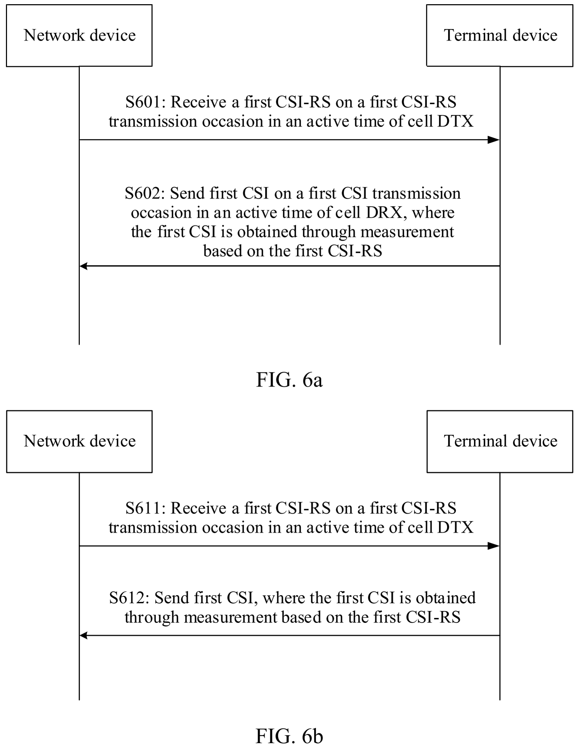

FIG. 6a and FIG. 6b are schematic flowcharts of a channel state information measurement method according to an embodiment of this application. In FIG. 6a, the channel state information measurement method includes the following steps S601 and S602. The method shown in FIG. 6a may be performed by a terminal device, or the method shown in FIG. 6a may be performed by a chip in a terminal device. FIG. 6a is described by using an example in which the method is performed by the terminal device.

S601: The terminal device receives a first CSI-RS from a network device on a first CSI-RS transmission occasion in an active time of cell DTX.

In other words, the network device sends one or more CSI-RSs to the terminal device on a CSI-RS transmission occasion in the active time of the cell DTX. Correspondingly, the terminal device may receive the one or more CSI-RSs from the network device on the CSI-RS transmission occasion in the active time of the cell DTX. It should be noted that the first CSI-RS mentioned in this application is one of the one or more CSI-RSs received by the terminal device in the active time of the cell DTX, and a transmission occasion used to transmit the first CSI-RS is referred to as the first CSI-RS transmission occasion in this application.

The first CSI-RS may be a reference signal used for channel measurement (for example, an NZP CSI-RS used for channel measurement) or a reference signal used for interference measurement (for example, an NZP CSI-RS or CSI-IM used for interference measurement). It should be noted that the CSI-IM is a zero power CSI-RS. In other words, the network device does not actually send a CSI-IM signal on a resource of the CSI-IM. There is interference of a signal of a neighboring cell or a background noise on the resource of the CSI-IM. The terminal device receives a signal on the resource of the CSI-IM to perform interference measurement. It may be understood that the CSI-IM is a signal sent by the neighboring cell.

In a possible implementation, before receiving the first CSI-RS from the network device, the terminal device receives CSI-RS resource configuration information from the network device, where the CSI-RS resource configuration information indicates the first CSI-RS transmission occasion, and the CSI-RS resource configuration information includes an NZP CSI-RS resource set. In addition, the terminal device further receives CSI reporting configuration information from the network device, where the CSI reporting configuration information indicates that there is a time domain restriction on channel measurement, and the CSI reporting configuration information is associated with the CSI-RS resource configuration information. In other words, the first CSI-RS is a CSI-RS indicated by the CSI-RS resource configuration information associated with first CSI.

It may be understood that the terminal device performs channel measurement based on the NZP CSI-RS and reports the CSI obtained through measurement to the network device on the CSI transmission occasion. The CSI reporting configuration information includes an identifier of a CSI-RS resource configuration used for channel measurement, that is, identifier information of an NZP CSI-RS resource configuration. The NZP CSI-RS resource configuration includes one or more NZP CSI-RS resources. Therefore, the CSI reporting configuration information is associated with an NZP CSI-RS resource in the NZP CSI-RS resource configuration. The first CSI-RS is an NZP CSI-RS that is used for channel measurement and that is transmitted by using an NZP CSI-RS resource in the NZP CSI-RS resource configuration.

In a possible implementation, before the terminal device receives the first CSI-RS from the network device, the terminal device receives CSI-RS resource configuration information from the network device, where the CSI-RS resource configuration information indicates a first CSI-RS transmission occasion, and the CSI-RS resource configuration information includes an NZP CSI-RS resource set used for interference measurement and/or a CSI-IM resource set. In addition, the terminal device further receives CSI reporting configuration information from the network device, where the CSI reporting configuration information indicates that there is a time domain restriction on interference measurement, and the CSI reporting configuration information is associated with the CSI-RS resource configuration information. The first CSI-RS is a CSI-RS indicated by CSI-RS resource configuration information associated with first CSI.

It may be understood that the terminal device performs interference measurement based on the NZP CSI-RS used for interference measurement, and reports the CSI obtained through measurement to the network device on the CSI transmission occasion. The CSI reporting configuration information includes an identifier of a CSI-RS resource configuration used for interference measurement, that is, identifier information of an NZP CSI-RS resource configuration used for interference measurement. The NZP CSI-RS resource configuration used for interference measurement includes one or more NZP CSI-RS resources used for interference measurement. Therefore, the CSI reporting configuration information is associated with the NZP CSI-RS resource used for interference measurement in the NZP CSI-RS resource configuration used for interference measurement, and the first CSI-RS is an NZP CSI-RS transmitted by using the NZP CSI-RS resource in the NZP CSI-RS resource configuration. The terminal device performs interference measurement based on the CSI-IM, and reports the CSI obtained through measurement to the network device on the CSI transmission occasion. The CSI reporting configuration information includes an identifier of a CSI-IM resource configuration, that is, identifier information of the CSI-IM resource configuration. The CSI-IM resource configuration includes one or more CSI-IM resources. Therefore, the CSI reporting configuration information is associated with a CSI-IM resource in the CSI-IM resource configuration, and the first CSI-RS is a signal on the CSI-IM resource in the CSI-IM resource configuration.

In a possible implementation, the terminal device receives cell DTX configuration information from the network device, where the cell DTX configuration information indicates the active time of the cell DTX. In another possible implementation, in addition to receiving the cell DTX configuration information from the network device, the terminal device may further receive cell DRX configuration information from the network device, where the cell DRX configuration information indicates the active time of the cell DRX.

It should be noted that a sequence of receiving the CSI-RS resource configuration information, the CSI reporting configuration information, the cell DTX configuration information, and the cell DRX configuration information by the terminal device is not specifically limited in this application. The terminal device may receive the CSI-RS resource configuration information, the CSI reporting configuration information, the cell DTX configuration information, and the cell DRX configuration information simultaneously or separately. In addition, for explanations of the CSI-RS resource configuration information, the CSI reporting configuration information, the cell DTX configuration information, and the cell DRX configuration information in this embodiment of this application, refer to the foregoing explanations of the CSI-RS resource configuration information, the CSI reporting configuration information, the cell DTX configuration information, and the cell DRX configuration information. Details are not described herein again.

S602: The terminal device sends the first CSI to the network device on a first CSI transmission occasion in the active time of the cell DRX. When the CSI reporting configuration information indicates that there is a time domain restriction on channel measurement and/or indicates that there is a time domain restriction on interference measurement, that is, when a parameter timeRestrictionForChannelMeasurements in the CSI reporting configuration information is configured as "configured" and/or a parameter timeRestrictionForInterferenceMeasurements is configured as "configured", the first CSI is obtained through measurement based on the first CSI-RS, the first CSI-RS transmission occasion is a CSI-RS transmission occasion that is not later than a slot in which the reference resource is located and that is closest to the first CSI transmission occasion and in the active time of the cell DTX, and the slot in which the reference resource is located is determined based on the first CSI transmission occasion. Correspondingly, the network device receives the CSI on the first CSI transmission occasion in the active time of the cell DRX.

Specifically, the reference signal for the first CSI measurement includes the following three cases.

Case 1: The first CSI is obtained through measurement based on a reference signal used for channel measurement.

In other words, when a parameter timeRestrictionForChannelMeasurements in the CSI reporting configuration information is configured as "configured", that is, when the CSI reporting configuration information indicates that there is a time domain restriction on channel measurement, the first CSI-RS is an NZP CSI-RS used for channel measurement, the first CSI-RS transmission occasion is an NZP CSI-RS transmission occasion that is not later than a slot in which the reference resource is located and that is closest to the first CSI transmission occasion and in the active time of the cell DTX, and the NZP CSI-RS used for channel measurement is an NZP CSI-RS configured by using NZP CSI-RS resource configuration information. The NZP CSI-RS resource configuration information is associated with CSI reporting configuration information corresponding to the first CSI.

Case 2: The first CSI is obtained through measurement based on a reference signal used for interference measurement.

In other words, when a parameter timeRestrictionForInterferenceMeasurements in the CSI reporting configuration information is configured as "configured", that is, when the CSI reporting configuration information indicates that there is a time domain restriction on interference measurement, CSI measurement includes any one of the following three cases: ① The first CSI-RS is an NZP CSI-RS used for interference measurement, the first CSI-RS transmission occasion is an NZP CSI-RS transmission occasion that is used for interference measurement and that is not later than a slot in which the reference resource is located and that is closest to the first CSI transmission occasion and in the active time of the cell DTX, the NZP CSI-RS used for interference measurement is an NZP CSI-RS configured by using NZP CSI-RS resource configuration information, and the NZP CSI-RS resource configuration information is associated with CSI reporting configuration information corresponding to the first CSI. ② Alternatively, the first CSI-RS is CSI-IM, the first CSI-RS transmission occasion is a CSI-IM transmission occasion that is not later than a slot in which the reference resource is located and that is closest to the first CSI transmission occasion and in the active time of the cell DTX, the CSI-IM is CSI-IM configured by using CSI-IM resource configuration information, and the CSI-IM resource configuration information is associated with CSI reporting configuration information corresponding to the first CSI. ③ Alternatively, the first CSI-RS is an NZP CSI-RS and CSI-IM that are used for interference measurement, the first CSI-RS transmission occasion includes an NZP CSI-RS transmission occasion and a CSI-IM transmission occasion that are used for interference measurement and that are not later than a slot in which a reference resource is located and that is closest to the first CSI transmission occasion and in the active time of the cell DTX, the NZP CSI-RS used for interference measurement is an NZP CSI-RS configured by using NZP CSI-RS resource configuration information, the CSI-IM is CSI-IM configured by using CSI-IM resource configuration information, and the NZP CSI-RS resource configuration information and the CSI-IM resource configuration information are both associated with CSI reporting configuration information corresponding to the first CSI, that is, the first CSI is obtained through measurement based on the NZP CSI-RS that meets the condition described in ③ and the CSI-IM that meets the condition described in ③.

Case 3: The first CSI is obtained through measurement based on a reference signal used for channel measurement and a reference signal used for interference measurement.

In other words, when parameters timeRestrictionForChannelMeasurements and timeRestrictionForInterferenceMeasurements in the CSI reporting configuration information are both configured as "configured", that is, when the CSI reporting configuration information indicates that there are time domain restrictions on both channel measurement and interference measurement, the first CSI is obtained through measurement based on a reference signal used for channel measurement (namely, an NZP CSI-RS used for channel measurement) and a reference signal used for interference measurement (namely, an NZP CSI-RS or CSI-IM used for interference measurement). For ease of understanding, in the case 3, an example in which the reference signal used for channel measurement (namely, an NZP CSI-RS used for channel measurement) is denoted as a first CSI-RS is used. The case 3 may be understood as including the following two branches.

Branch ①: The first CSI is obtained through measurement based on the first CSI-RS and a reference signal used for interference measurement (which may be an NZP CSI-RS or CSI-IM used for interference measurement herein, and is denoted as a second CSI-RS). A transmission occasion corresponding to the first CSI-RS is denoted as a first CSI-RS transmission occasion, and a transmission occasion corresponding to the second CSI-RS is denoted as a second CSI-RS transmission occasion. The first CSI-RS transmission occasion is an NZP CSI-RS transmission occasion that is not later than a slot in which a reference resource is located and that is closest to a first CSI transmission occasion and in an active time of cell DTX. The NZP CSI-RS is an NZP CSI-RS configured for channel measurement by using NZP CSI-RS resource configuration information. The NZP CSI-RS resource configuration information is associated with CSI reporting configuration information corresponding to the first CSI. In addition, the second CSI-RS transmission occasion includes an NZP CSI-RS transmission occasion or a CSI-IM transmission occasion that is used for interference measurement and that is not later than a slot in which a reference resource is located and that is closest to a first CSI transmission occasion and in an active time of cell DTX. The NZP CSI-RS used for interference measurement is an NZP CSI-RS configured by using NZP CSI-RS resource configuration information. The CSI-IM is CSI-IM configured by using CSI-IM resource configuration information. The NZP CSI-RS resource configuration information or the CSI-IM resource configuration information is associated with CSI reporting configuration information corresponding to the first CSI.

Branch ②: The first CSI is obtained through measurement based on the first CSI-RS and a reference signal used for interference measurement (which is CSI-IM herein, and is denoted as a third CSI-RS). A transmission occasion corresponding to the first CSI-RS is denoted as a first CSI-RS transmission occasion, and a transmission occasion corresponding to the third CSI-RS is denoted as a third CSI-RS transmission occasion. The first CSI-RS transmission occasion is an NZP CSI-RS transmission occasion that is not later than a slot in which a reference resource is located and that is closest to a first CSI transmission occasion and in an active time of cell DTX. The NZP CSI-RS is an NZP CSI-RS configured for channel measurement by using NZP CSI-RS resource configuration information. The NZP CSI-RS resource configuration information is associated with CSI reporting configuration information corresponding to the first CSI. In addition, the third CSI-RS transmission occasion is a CSI-IM transmission occasion that is not later than the slot in which the reference resource is located and that is closest to the first CSI transmission occasion, the CSI-IM is CSI-IM configured by using CSI-IM resource configuration information, and the CSI-IM resource configuration information is associated with CSI reporting configuration information corresponding to the first CSI.

It may be understood that a difference between the branch ① and the branch ② in the case 3 lies in whether a transmission occasion (namely, the second transmission occasion or the third transmission occasion) of a reference signal used for interference measurement is limited by the active time of the cell DTX. In the branch ①, the second CSI-RS transmission occasion is limited by the active time of the cell DTX. In other words, the second CSI-RS transmission occasion is located in the active time of the cell DTX. In a possible implementation of the branch ①, the first CSI-RS transmission occasion and the second CSI-RS transmission occasion are in the same active time of the cell DTX. In the branch ②, the third CSI-RS transmission occasion is not limited by the active time of the cell DTX. In other words, whether the third CSI-RS transmission occasion is in the active time of the cell DTX is not limited in this application.

With reference to any one of the foregoing case 1 to case 3, in a possible implementation, the first CSI reporting quantity mentioned in this application may be but is not limited to the following cases: (1) CRI, RI, PMI, and CQI; (2) CRI, RI, and a wideband precoding indicator (also referred to as i1); (3) CRI, RI, i1, and CQI; (4) CRI, RI, and CQI; (5) CRI, RI, LI, PMI, and CQI; (6) L1-SINR; and (7) L1-RSRP.

It may be understood that the terminal device may have one or more CSI transmission occasions in the active time of the cell DRX. The first CSI transmission occasion mentioned in this application is one of the one or more CSI transmission occasions. This application is described by using an example in which the first CSI transmitted based on the first CSI transmission occasion is obtained through measurement based on the first CSI-RS transmitted on the first CSI-RS transmission occasion.

In other words, the terminal device determines the reference resource based on the first CSI transmission occasion. When the first CSI-RS transmission occasion is a CSI-RS transmission occasion that is not later than the slot in which the reference resource is located and that is closest to the first CSI transmission occasion and in the active time of the cell DTX, the terminal device performs measurement based on the first CSI-RS transmitted based on the first CSI-RS transmission occasion, and reports a measurement result, namely, the first CSI, at the first CSI transmission occasion. The terminal device needs a processing time to calculate the CSI, and a time interval between a time domain position of the reference resource (namely, the slot in which the reference resource is located) and the corresponding CSI may be understood as a processing time required by the terminal device to calculate the CSI based on the CSI-RS. Therefore, the terminal device calculates the CSI based on the CSI-RS that is not later than the reference resource. If the terminal device calculates the CSI based on the CSI-RS that is later than the reference resource, the terminal device cannot report the CSI on a corresponding CSI transmission occasion in time.

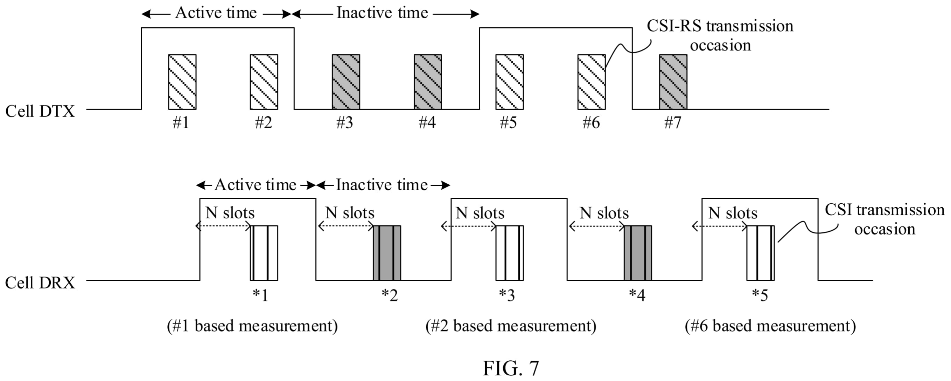

For example, in FIG. 7, the network device configures seven CSI-RS transmission occasions: # 1 to # 7, and configures five CSI transmission occasions: *1 to *5. The terminal device may determine, based on the CSI transmission occasion, a slot in which a corresponding reference resource is located. In FIG. 7, a slot in which a reference resource corresponding to a CSI transmission occasion is located is at a preset time domain position before a start position of the CSI transmission occasion (for example, the slot in which the reference resource is located is an N^{th} slot before a slot in which the CSI transmission occasion is located, where N is a positive integer). With reference to the active time of the cell DTX and the active time of the cell DRX, the terminal device may determine that a CSI transmission occasion *1 is measured based on a CSI-RS transmission occasion #1, a CSI transmission occasion *3 is measured based on a CSI-RS transmission occasion #2, and a CSI transmission occasion *5 is measured based on a CSI-RS transmission occasion #6. It should be noted that a manner of determining the slot in which the reference resource is located is not specifically limited in this application. In this application, an example in which the slot in which the reference resource is located is the N^{th} slot before the CSI transmission occasion is merely used for description.

In other words, when the CSI-RS transmission occasion that is not later than the slot in which the reference resource is located and that is closest to the first CSI transmission occasion is located in the inactive time of the cell DTX, the first CSI transmission occasion is measured based on the first CSI-RS transmission occasion in the active time of the cell DTX. For example, in FIG. 7, a CSI-RS transmission occasion that is not later than a slot in which a reference resource corresponding to a CSI transmission occasion *3 is located and that is closest to the CSI transmission occasion *3 is a CSI-RS transmission occasion #4, and the CSI-RS transmission occasion #4 is located in the inactive time of the cell DTX. In this case, the CSI transmission occasion *3 is measured based on a CSI-RS transmission occasion closest to the CSI transmission occasion *3 (namely, the CSI-RS transmission occasion #2) in the CSI-RS transmission occasions in the active time of the cell DTX.

In conclusion, according to the CSI measurement method shown in FIG. 6a, when there is a time domain restriction on channel measurement or interference measurement, the CSI transmission occasion of the terminal device in the active time of the cell DRX may be measured and reported based on the received CSI-RS. This avoids a case in which the terminal device cannot send CSI for a long period of time because the CSI-RS transmission occasion that is not later than the slot in which the reference resource corresponding to the CSI transmission occasion is located and that is closest to the CSI transmission occasion is located in the inactive time of the cell DTX, or the CSI transmission occasion is located in the inactive time of the cell DRX, so that communication performance is improved.

In FIG. 6b, the channel state information measurement method includes the following step S611 and step S612. The method shown in FIG. 6b may be performed by a terminal device, or the method shown in FIG. 6b may be performed by a chip in a terminal device. FIG. 6b is described by using an example in which the method is performed by the terminal device.

S611: The terminal device receives a first CSI-RS from a network device on a first CSI-RS transmission occasion in an active time of cell DTX.

For a specific implementation of S611, refer to the description of the specific implementation of S601. Details are not described herein again.

S612: The terminal device sends first CSI to the network device on a first CSI transmission occasion. When the CSI reporting configuration information indicates that there is a time domain restriction on channel measurement and/or indicates that there is a time domain restriction on interference measurement, that is, when a parameter timeRestrictionForChannelMeasurements in the CSI reporting configuration information is configured as "configured" and/or a parameter timeRestrictionForInterferenceMeasurements is configured as "configured", the first CSI is obtained through measurement based on the first CSI-RS, the first CSI-RS transmission occasion is a CSI-RS transmission occasion that is not later than a slot in which the reference resource is located and that is closest to the first CSI transmission occasion and in the active time of the cell DTX, and the slot in which the reference resource is located is determined based on the first CSI transmission occasion. Correspondingly, the network device receives the CSI on the first CSI transmission occasion.

For a specific implementation of S612, refer to the description of the specific implementation of S602. Details are not described herein again. It may be understood that a difference between the specific implementation of S612 and the specific implementation of S602 lies in that, regardless of whether cell DRX is configured for the terminal device of S612 (or it is understood that regardless of whether the terminal device receives cell DRX configuration information from the network device), the terminal device and the network device may perform S612.

It may be understood that the terminal device may have one or more CSI transmission occasions. The first CSI transmission occasion mentioned in FIG. 6b in this application is one of the one or more CSI transmission occasions. This application is described by using an example in which the first CSI transmitted on the first CSI transmission occasion is obtained through measurement based on the first CSI-RS transmitted on the first CSI-RS transmission occasion.

In conclusion, according to the CSI measurement method shown in FIG. 6b, when there is a time domain restriction on channel measurement or there is a time domain restriction on interference measurement, the terminal device may perform measurement and reporting on a CSI transmission occasion based on a received CSI-RS. This avoids a case in which the terminal device cannot send CSI for a long period of time because the CSI-RS transmission occasion that is not later than the slot in which the reference resource corresponding to the CSI transmission occasion is located and that is closest to the CSI transmission occasion is located in the inactive time of the cell DTX, or the CSI transmission occasion is located in the inactive time of the cell DRX, so that communication performance is improved.

It can be understood that, to implement the functions in the foregoing embodiment, the terminal device includes corresponding hardware structures and/or software modules for performing the functions. A person skilled in the art should be easily aware that, with reference to units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

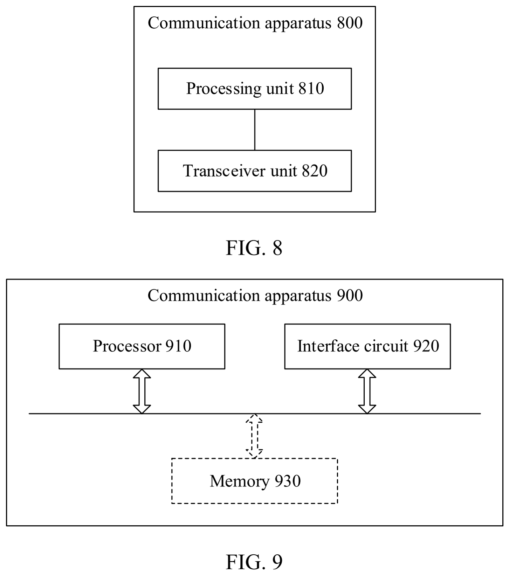

FIG. 8 and FIG. 9 are diagrams of structures of possible communication apparatuses according to an embodiment of this application. These communication apparatuses may be configured to implement functions of the terminal device in the foregoing method embodiments. Therefore, beneficial effect of the foregoing method embodiments can also be implemented. In this embodiment of this application, the communication apparatus may be the terminal 120 shown in FIG. 2, or may be a module (for example, a chip) used in a terminal device.

As shown in FIG. 8, a communication apparatus 800 includes a processing unit 810 and a transceiver unit 820. The communication apparatus 800 is configured to implement functions of the terminal device in the method embodiment shown in FIG. 6a or FIG. 6b.

When the communication apparatus 800 is configured to implement functions of the terminal device in the method embodiment shown in FIG. 6a, the transceiver unit 820 is configured to receive a first CSI-RS from a network device on a first CSI-RS transmission occasion in an active time of cell DTX, and is further configured to send first CSI to the network device on a first CSI transmission occasion in an active time of cell DRX, where the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of cell DTX, and the slot in which the reference resource is located is determined based on the first CSI transmission occasion.

When the communication apparatus 800 is configured to implement functions of the terminal device in the method embodiment shown in FIG. 6b, the transceiver unit 820 is configured to receive a first CSI-RS from a network device on a first CSI-RS transmission occasion in an active time of cell DTX, and is further configured to send first CSI to the network device on a first CSI transmission occasion, where the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of the cell DTX, and the slot in which the reference resource is located is determined based on the first CSI transmission occasion.

In a possible implementation, the first CSI-RS is a non-zero power NZP CSI-RS used for channel measurement.

In a possible implementation, the first CSI is further obtained through measurement based on a second CSI-RS, and the second CSI-RS is an NZP CSI-RS or CSI-IM used for interference measurement, where the second CSI-RS is transmitted on a second CSI-RS transmission occasion, the second CSI-RS transmission occasion is a CSI-RS transmission occasion that is not later than a slot in which a reference resource is located and that is closest to the first CSI transmission occasion and in an active time of cell DTX, and the slot in which the reference resource is located is determined based on the first CSI transmission occasion.

In a possible implementation, the first CSI-RS transmission occasion and the second CSI-RS transmission occasion are in the same active time of the cell DTX.

In a possible implementation, the first CSI is further obtained through measurement based on a third CSI-RS, and the third CSI-RS is CSI-IM used for interference measurement, where the third CSI-RS is transmitted on a third CSI-RS transmission occasion, the third CSI-RS transmission occasion is a CSI-RS transmission occasion that is not later than the slot in which the reference resource is located and that is closest to the first CSI transmission occasion, and the slot in which the reference resource is located is determined based on the first CSI transmission occasion.

In a possible implementation, the transceiver unit 820 is further configured to receive CSI-RS resource configuration information from the network device, where the CSI-RS resource configuration information indicates the first CSI-RS transmission occasion, and the CSI-RS resource configuration information includes a non-zero power NZP CSI-RS resource set. The transceiver unit 820 is further configured to receive CSI reporting configuration information from the network device, where the CSI reporting configuration information indicates that there is a time domain restriction on channel measurement, and the CSI reporting configuration information is associated with the CSI-RS resource configuration information.

In a possible implementation, the transceiver unit 820 is further configured to receive CSI-RS resource configuration information from the network device, where the CSI-RS resource configuration information indicates the first CSI-RS transmission occasion, and the CSI-RS resource configuration information includes an NZP CSI-RS resource set used for interference measurement and/or includes a channel state information interference measurement CSI-IM resource set. The transceiver unit 820 is further configured to receive CSI reporting configuration information from the network device, where the CSI reporting configuration information indicates that there is a time domain restriction on interference measurement, and the CSI reporting configuration information is associated with the CSI-RS resource configuration information.

In a possible implementation, the transceiver unit 820 is further configured to receive cell DTX configuration information from the network device, where the cell DTX configuration information indicates the active time of the cell DTX.

In a possible implementation, the transceiver unit 820 is further configured to receive cell DRX configuration information from the network device, where the cell DRX configuration information indicates the active time of the cell DRX.

For more detailed descriptions of the transceiver unit 820, refer to related descriptions of the method embodiment shown in FIG. 6a or FIG. 6b.

As shown in FIG. 9, a communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to: store instructions executed by the processor 910, or store input data required by the processor 910 to run instructions, or store data generated after the processor 910 runs instructions.

When the communication apparatus 900 is configured to implement the method shown in FIG. 6a or FIG. 6b, the processor 910 is configured to implement a function of the processing unit 810, and the interface circuit 920 is configured to implement a function of the transceiver unit 820.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an apparatus A sends information to an apparatus B may be that A directly sends the information to B, or may be that A indirectly sends the information to B via another apparatus. Similarly, that the entity B receives the information from the entity A may be that the entity B directly receives the information sent by the entity A, or may be that the entity B indirectly receives the information sent by the entity A via another entity. The apparatuses A and B herein each may be a RAN node or a terminal, or may be a module in the RAN node or the terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in the base station or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may indicate the following: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A channel state information measurement method, wherein the method comprises:
receiving a first channel state information reference signal CSI-RS from a network device on a first CSI-RS transmission occasion in an active time of cell discontinuous transmission cell DTX; and
sending first channel state information CSI to the network device on a first CSI transmission occasion in an active time of cell discontinuous reception cell DRX, wherein the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of the cell DTX, and the slot in which the reference resource is located is determined based on the first CSI transmission occasion.

2. A channel state information measurement method, wherein the method comprises:
receiving a first channel state information reference signal CSI-RS from a network device on a first CSI-RS transmission occasion in an active time of cell discontinuous transmission cell DTX; and
sending first CSI to the network device, wherein the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of the cell DTX, and the slot in which the reference resource is located is determined based on the first CSI transmission occasion.

3. The method according to claim 1 or 2, wherein the first CSI-RS is a non-zero power NZP CSI-RS used for channel measurement.

4. The method according to any one of claims 1 to 3, wherein the first CSI is further obtained through measurement based on the second CSI-RS, and the second CSI-RS is an NZP CSI-RS or CSI-IM used for interference measurement, wherein
the second CSI-RS is transmitted on a second CSI-RS transmission occasion, the second CSI-RS transmission occasion is a CSI-RS transmission occasion that is not later than the slot in which the reference resource is located and that is closest to the first CSI transmission occasion and in the active time of the cell DTX, and the slot in which the reference resource is located is determined based on the first CSI transmission occasion.

5. The method according to claim 4, wherein the first CSI-RS transmission occasion and the second CSI-RS transmission occasion are in the same active time of the cell DTX.

6. The method according to any one of claims 1 to 3, wherein the first CSI is further obtained through measurement based on a third CSI-RS, and the third CSI-RS is CSI-IM used for interference measurement, wherein
the third CSI-RS is transmitted on a third CSI-RS transmission occasion, the third CSI-RS transmission occasion is a CSI-RS transmission occasion that is not later than the slot in which the reference resource is located and that is closest to the first CSI transmission occasion, and the slot in which the reference resource is located is determined based on the first CSI transmission occasion.

7. The method according to any one of claims 1 to 6, wherein the CSI-RS transmission occasion that is not later than the slot in which the reference resource is located and that is closest to the first CSI transmission occasion is located in an inactive time of the cell DTX.

8. The method according to any one of claims 1 to 7, wherein the method further comprises:
receiving CSI-RS resource configuration information from the network device, wherein the CSI-RS resource configuration information indicates the first CSI-RS transmission occasion, and the CSI-RS resource configuration information comprises an NZP CSI-RS resource set; and
receiving CSI reporting configuration information from the network device, wherein the CSI reporting configuration information indicates that there is a time domain restriction on channel measurement, and the CSI reporting configuration information is associated with the CSI-RS resource configuration information.

9. The method according to any one of claims 1 to 7, wherein the method further comprises:
receiving CSI-RS resource configuration information from the network device, wherein the CSI-RS resource configuration information indicates the first CSI-RS transmission occasion, the CSI-RS resource configuration information comprises an NZP CSI-RS resource set used for interference measurement, and/or comprises a channel state information interference measurement CSI-IM resource set; and
receiving CSI reporting configuration information from the network device, wherein the CSI reporting configuration information indicates that there is a time domain restriction on interference measurement, and the CSI reporting configuration information is associated with the CSI-RS resource configuration information.

10. The method according to any one of claims 1 to 9, wherein the method further comprises:
receiving cell DTX configuration information from the network device, wherein the cell DTX configuration information indicates the active time of the cell DTX.

11. The method according to claim 10, wherein the method further comprises:
receiving cell DRX configuration information from the network device, wherein the cell DRX configuration information indicates the active time of the cell DRX.

12. A communication apparatus, wherein the apparatus comprises:
a transceiver unit, configured to receive a first channel state information reference signal CSI-RS from a network device on a first CSI-RS transmission occasion in an active time of cell discontinuous transmission cell DTX, wherein
the transceiver unit is further configured to send first channel state information CSI to the network device on a first CSI transmission occasion in an active time of cell discontinuous reception cell DRX, wherein the first CSI is obtained through measurement based on the first CSI-RS, the first CSI-RS transmission occasion is a CSI-RS transmission occasion that is not later than a slot in which a reference resource is located and that is closest to the first CSI transmission occasion and in the active time of the cell DTX, and the slot in which the reference resource is located is determined based on the first CSI transmission occasion.

13. A communication apparatus, wherein the apparatus comprises:
a transceiver unit, configured to receive a first channel state information reference signal CSI-RS from a network device on a first CSI-RS transmission occasion in an active time of cell discontinuous transmission cell DTX, wherein
the transceiver unit is further configured to send first CSI to the network device, wherein the first CSI is obtained through measurement based on the first CSI-RS, the first CSI-RS transmission occasion is a CSI-RS transmission occasion that is not later than a slot in which a reference resource is located and that is closest to a first CSI transmission occasion and in the active time of the cell DTX, and the slot in which the reference resource is located is determined based on the first CSI transmission occasion.

14. The apparatus according to claim 12 or 13, wherein the first CSI-RS is a non-zero power NZP CSI-RS used for channel measurement.

15. The apparatus according to any one of claims 12 to 14, wherein the first CSI is further obtained through measurement based on the second CSI-RS, and the second CSI-RS is an NZP CSI-RS or CSI-IM used for interference measurement, wherein
the second CSI-RS is transmitted on a second CSI-RS transmission occasion, the second CSI-RS transmission occasion is the CSI-RS transmission occasion that is not later than the slot in which the reference resource is located and that is closest to the first CSI transmission occasion and in the active time of the cell DTX, and the slot in which the reference resource is located is determined based on the first CSI transmission occasion.

16. The apparatus according to claim 15, wherein the first CSI-RS transmission occasion and the second CSI-RS transmission occasion are in the same active time of the cell DTX.

17. The apparatus according to any one of claims 12 to 14, wherein the first CSI is further obtained through measurement based on a third CSI-RS, and the third CSI-RS is CSI-IM used for interference measurement, wherein
the third CSI-RS is transmitted on a third CSI-RS transmission occasion, the third CSI-RS transmission occasion is a CSI-RS transmission occasion that is not later than the slot in which the reference resource is located and that is closest to the first CSI transmission occasion, the slot in which the reference resource is located is determined based on the first CSI transmission occasion, and the third CSI-RS is an NZP IM used for interference measurement.

18. The apparatus according to any one of claims 12 to 17, wherein
the CSI-RS transmission occasion that is not later than the slot in which the reference resource is located and that is closest to the first CSI transmission occasion is located in an inactive time of the cell DTX.

19. The apparatus according to any one of claims 12 to 18, wherein
the transceiver unit is further configured to receive CSI-RS resource configuration information from the network device, wherein the CSI-RS resource configuration information indicates the first CSI-RS transmission occasion, and the CSI-RS resource configuration information comprises a non-zero power NZP CSI-RS resource set; and
the transceiver unit is further configured to receive CSI reporting configuration information from the network device, wherein the CSI reporting configuration information indicates that there is a time domain restriction on channel measurement, and the CSI reporting configuration information is associated with the CSI-RS resource configuration information.

20. The apparatus according to any one of claims 12 to 18, wherein
the transceiver unit is further configured to receive CSI-RS resource configuration information from the network device, wherein the CSI-RS resource configuration information indicates the first CSI-RS transmission occasion, the CSI-RS resource configuration information comprises an NZP CSI-RS resource set used for interference measurement, and/or comprises a channel state information interference measurement CSI-IM resource set; and
the transceiver unit is further configured to receive CSI reporting configuration information from the network device, wherein the CSI reporting configuration information indicates that there is a time domain restriction on interference measurement, and the CSI reporting configuration information is associated with the CSI-RS resource configuration information.

21. The apparatus according to any one of claims 12 to 20, wherein
the transceiver unit is further configured to receive cell DTX configuration information from the network device, wherein the cell DTX configuration information indicates the active time of the cell DTX.

22. The apparatus according to claim 21, wherein
the transceiver unit is further configured to receive cell DRX configuration information from the network device, wherein the cell DRX configuration information indicates the active time of the cell DRX.

23. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 11 by using a logic circuit or by executing code instructions.

24. A computer-readable storage medium, wherein the storage medium stores a computer program or instructions, and when the computer program or the instructions are executed by a communication apparatus, the method according to any one of claims 1 to 11 is implemented.
